# EUROPÄISCHE PATENTANMELDUNG

(11) **EP 3 764 260 A1**
(43) Veröffentlichungstag der Anmeldung: **13.01.2021**
(21) Anmeldenummer: 19185960.2
(22) Anmeldetag: 12.07.2019
(51) Int. Cl.: G06F 21/56, H04L 29/06

(54) **ANALOGE FIREWALL**

(71) Anmelder: Mojzis, Frantisek, 97404 Banská Bystrica (SK)
(72) Erfinder: Mojzis, Frantisek, 97404 Banská Bystrica (SK)
(74) Vertreter: Jeck, Anton

(57) **Zusammenfassung**

Die vorliegende Erfindung betrifft eine Vorrichtung sowie ein Verfahren zum Schutz einer Computereinrichtung vor Schadsoftware beispielsweise aus einer elektronischen Nachricht.

## Beschreibung

Die vorliegende Erfindung betrifft ein Kommunikationssystem gemäß dem Oberbegriff des Anspruchs 1 sowie ein Verfahren zur Filtration von Schadsoftware aus einem digitalen Signal oder digitalen Daten gemäß dem Oberbegriff des Anspruchs 8.

Ein solches Kommunikationssystem soll dazu dienen einen Computersystembereich, insbesondere einen Computer vor Schadsoftware zu schützen, welcher innerhalb eines sensiblen Computernetzwerks vorliegen kann oder selbst möglichst ausfallsicher vorliegen soll.

Bekannte Systeme arbeiten mit Firewalls oder Antivirusprogrammen, um eine Infizierung des Systems zu verhindern oder eine solche festzustellen.

Gerade beim Empfangen von Nachrichten aus unbekannten Quellen, besteht regelmäßig das Risiko einer Infizierung des Computersystems durch Schadsoftware.

Die vorliegende Erfindung stellt sich die **Aufgabe** ein Kommunikationssystem zwischen zwei Computern oder Computerbereichen bereitzustellen, welches zumindest für bekannte Schadsoftware undurchdringbar ist.

Die Aufgabe wird erfindungsgemäß durch ein Datenverarbeitungssystem digitaler Daten mit mindestens einem die Daten empfangenden analogen Sender sowie mindestens einem analogen Empfänger gelöst wobei dass der Sender mit dem Empfänger kontaktfrei kommuniziert.

Das Datenverarbeitungssystem kann auch als Kommunikationssystem oder als Firewall gegen Schadsoftware bezeichnet werden.

Die vorliegender Erfindung ist zumindest auch durch ein Kommunikationssystem verwirklicht, welches einen analogen Sender, welcher digitaler Signale eines ersten Computers sendet und einem analogen Empfänger aufweist, welcher ausgebildet ist die analogen Signale des analogen Senders kontaktfrei zu empfangen, und ausgebildet ist die Informationen des analogen Signals an einen zweiten Computer weiterzuleiten.

Nach der vorliegenden Erfindung soll ein Computer eine beliebige Einrichtung zur elektronischen Datenverarbeitung sein. Der erst und der zweite Computer können auch separate Bereiche derselben Datenverarbeitungseinrichtung sein, welche beispielsweise in einen öffentlichen und einen privaten, also geschützten Bereich unterteilt sein können. Eine Kommunikation von dem ersten Bereich (erster Computer) zu dem zweiten Bereich (zweite Computer) soll dabei, vorzugsweise ausschließlich, über das erfindungsgemäße Kommunikationssystem erfolgen.

Kontaktfrei soll nach der vorliegenden Erfindung als eine Übertragung von Informationen beschreiben werden, welche nicht über die traditionellen Kommunikationswege Kabel oder Funk erfolgt. Das analoge Signal soll demnach erfindungsgemäß durch den freien Raum, also beispielsweise durch die Luft oder ein Vakuum übertragen werden.

Erfindungsgemäß kann ein analoges Signal jedes Signal sein, welches nicht digital ist. Insbesondere bedeutet analog nach der vorliegenden Erfindung ein Signal mit stufenlosen und unterbrechungsfrei im Verlauf. Dabei soll der Unterbrechung freie Verlauf zumindest bereichsweise erfolgen (z.B. gepulstes analoges Signal). Bei dem oder den analogen Signalen kann es sich insbesondere um eine im Zeitverlauf sich sinusförmig durch den Raum fortbewegende Welle handeln. Besonders bevorzugt handelt es sich um ein akustisches Signal.

Vorteilhafter Weise kann es vorgesehen sein, dass das analoge Signal nur dann als-Ton/akkustische Wellen/Akustisches Signal übertragen werden kann, wenn ein (Software-) Modul / Programm, vorzugsweise zu Beginn, verwendet wird, eine ausreichende Anzahl von Tonwerten einzustellen, um unerwünschte, schädliche Informationen, insbesondere die Art der Computerviren und dergleichen nicht zu übertragen/herauszufiltern.

Nach einer bevorzugten Weiterbildung der vorliegenden Erfindung ist es vorgesehen, dass der Empfänger einen Wandler aufweist, welche die analogen Signale in digitale Signale umwandelt. Bei dem Wandler kann es sich beispielsweise um ein Mikrofon handeln, welches das analoge Signal in bekannter Weise in ein digitales Signal umwandelt. Akustische Wellen als analoge Signale können hierbei durch das Mikrofon als Wandler aufgenommen und in digitaler Form an den zweiten Computer weitergeleitet werden.

Besonders bevorzugt ist es nach einer vorliegenden Erfindung, dass das Signal ein akustisches Signal ist. Der analoge Sender kann hierbei beispielsweise ein Lautsprecher sein oder eine andere Einrichtung, welche ausgebildet ist, ein digitales Signal oder Digitale Daten in ein oder mehrere akustisches Signale umzuwandeln. Dieses akustische Signal kann dann vom Empfänger des zweiten Computers kontaktfrei empfangen werden. Bevorzugt wandelt der Wandler des Empfängers das akustische Signal anschließend in ein digitales Signal um, welches durch den zweiten Computer lesbar sein kann.

Nach einer zweckmäßigen Weiterbildung der vorliegenden Erfindung ist es vorgesehen, dass der zweite Computer mit dem ersten Computer elektronisch verbunden ist, wobei eine Kommunikation über die elektronische Verbindung von den zweiten Computer (nur) in Richtung des ersten Computers ermöglicht ist. Die digitalen Signale des ersten Computers können insbesondere eine elektronische Nachricht, beispielsweise eine E-Mail sein. Diese E-Mail kann beispielsweise Text und Bildelemente aufweisen.

Der zweite Computer soll über das Kommunikationssystem eine E-Mail vom ersten Computer empfangen, welche dieser wiederum über das Internet empfangen haben kann, wobei in der E-Mail enthaltende Schadsoftware, beispielsweise Viren oder Trojaner, durch die Umwandlung des Signals aus der Nachricht gefiltert werden.

Durch die Umwandlung des digitalen Signals zu der elektronischen Nachricht in ein analoges Signal, können Hintergrunddaten, welche nicht eindeutig dem Bild oder dem Text der E-Mail zugeordnet werden können, herausgefiltert werden, da das Signal, das als analoge Signal ausgesendet wird, lediglich Informationen zu dem in dem E-Mail enthaltenen Text und Bild aufweisen kann. Beispielsweise kann eine Umwandlung eines Videosignals, also der Informationen, die tatsächlich auf einem Bildschirm darstellbar/dargestellt sind (Text, Bilder, Videos,...), in das analoge Signal erfolgen. Dadurch ist verhindert, dass Hintergrunddaten (also Daten die nicht unmittelbar auf einem Bildschirm, z.B. beim Lesen einer E-Mail darstellbar sind), welche auch Schadsoftware enthalten kann mit an den zweiten Computer übertragen wird.

Der Empfänger, welcher das analoge Signal empfängt und, als digitales Signal dem zweiten Computer zur Verfügung stellen kann, wandelt das analoge Signal wieder zu Bild- und/oder Text- und/oder Videodaten um, wobei das rekonstruierte digitale Signal, durch die Übertragung als analoges Signal, frei von Schadsoftware ist. Bereits das analoge Signal kann frei von Schadsoftware sein, da dieses beispielsweise lediglich aus Bild und Textinformationen der elektronischen Nachricht gebildet sein kann.

Hierdurch kann der zweite Computer ohne weitere Firewall oder Software zur Detektion und Entfernung von Schadsoftware betrieben werden und ohne das eine Infektion durch Schadsoftware zu befürchten ist.

Zwischen dem zweiten Computer und dem ersten Computer kann eine elektronische Verbindung bestehen, welche lediglich eine Übertragung von Informationen/Daten von dem zweiten Computer zu dem ersten Computer ermöglicht. Eine Übertragung von Daten/Informationen von dem ersten Computer zu dem zweiten Computer mittels der elektronischen Verbindung kann verhindert sein.

Um von dem zweiten Computer aus auf die empfangene elektronische Nachricht antworten zu können, ist es erforderlich eine Verbindung mit dem Internet und/oder dem ersten Computer aufnehmen zu können. Durch eine elektronische Datenverbindung zwischen dem ersten und dem zweiten Computer, welche lediglich das Senden von Informationen in Richtung des ersten Computers zulässt, wird eine Gefährdung der Infektion des zweiten Computers durch Schadsoftware über die elektronische Datenverbindung verhindert. Gleichsam ist das Senden mit einer erhöhten Geschwindigkeit bereitgestellt, da ein Wandeln der Informationen/Daten digital-analogdigital entfallen kann.

Demnach wird zwar vorzugsweise eine elektronische Nachricht von dem zweiten Computer über das analoge Signal kontaktfrei empfangen, eine Nachricht jedoch von dem zweiten Computer über die elektronische Datenverbindung an den ersten Computer beziehungsweise das Internet und damit an der Empfänger der elektronischen Nachricht übermittelt.

Besonders bevorzugt ist es vorgesehen, dass das Signal der Inhalt mindesten einer elektronischen Nachricht, insbesondere einer E-Mail, insbesondere der Text und/oder die Bilder der Nachricht, ist.

Grundsätzlich ist es denkbar, dass auch andere Informationen über das voranstehend beschriebene Kommunikationssystem von dem ersten Computer an einen zweiten Computer übermittelbar sind. Besonders bevorzugt handelt es sich hierbei jedoch um Text und/oder Bilddaten einer elektronischen Nachricht, da diese in besonders einfacher Weise aus einem digitalen Signal, insbesondere einem Videosignal, in ein analoges Signal unwandelbar sind.

Das erfindungsgemäße Verfahren zur Filtration von Schadsoftware aus einem digitalen Signal ist insbesondere dadurch verwirklicht, dass das Signal mittels eines analogen Senders gesendet wird, das analoge Signal von einem analogen Empfänger empfangen wird und was empfangen analoge Signal in ein digitales Signal zurück gewandelt wird.

Nachfolgend wird die vorliegende Erfindung nach einem bevorzugten Ausführungsbeispiel anhand der beiliegenden Zeichnung erläutert.

Bei der Umwandlung des digitalen Signals in ein analoges Signal kann es von Vorteil sein, zuvor die für die Übertragung gewünschten Text und Bildelemente der Nachricht zu extrahieren, dieser Vorgang kann ebenfalls von dem Kommunikationssystem vollzogen werden, indem die Nachricht analysiert wird oder das Videosignal der Angezeigten Nachricht ausgelesen wird. Dies hat gegenüber der vollständigen Umwandlung der Nachricht zum einen den Vorteil, dass die Datenmenge reduziert ist. Zum anderen kann es dem Schutz vor einer Übertragung von Schadsoftware zusätzlich zuträglich sein.

In der Figur zeigt:

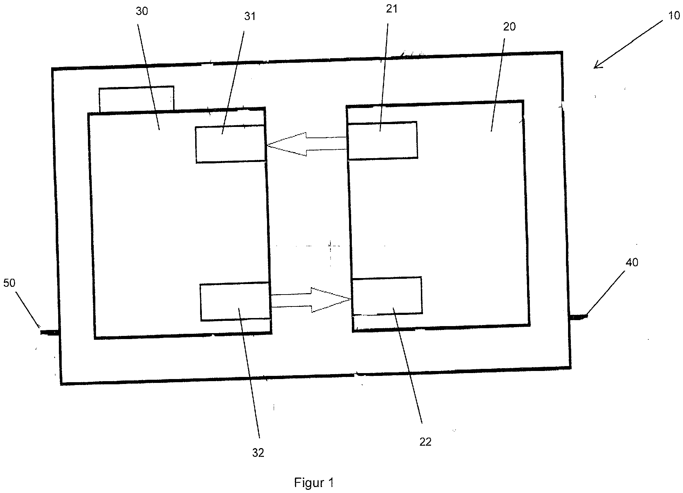

- Figur 1: eine schematische Darstellung eines erfindungsgemäßen Test Kommunikationssystems.

Figur 1 zeigt eine Ausführungsform des erfindungsgemäßen Kommunikatioinsystem/Datenverarbeitungsystem 10, welches eine erste Untereinheit 20 und eine zweite und Untereinheit 30 aufweisen kann. Die erste Untereinheit kann als erster Computer und die zweite unter Einheit als zweiter Computer ausgebildet sein. Grundsätzlich kann die erste Untereinheit der analoge Sender sein und die zweite Untereinheit der analoge Empfänger sein, welcher das analoge Signal in ein digitales Signal zurück gewandelt. Hierfür kann die erste Untereinheit 20 mit einem Wandler bereitgestellt sein, welcher das digitale Signal in ein analoges Signal, beispielsweise ein akustisches Signal oder ein optisches Signal umwandelt.

Die Untereinheit 30 kann mit einem analogen Empfänger, beispielsweise eine Mikrofon oder einem optischen Sensor, beispielsweise einer Kamera, ausgebildet sein, dass analoge Signal der Untereinheit 20 zu empfangen. Der erste Computer 20 beziehungsweise die Untereinheit 20 kann mit dem Internet 40 verbunden sein. Die zweite Untereinheit 30, insbesondere der zweite Computer 30 kann mit einem (privaten/geschützten) Netzwerk verbunden sein. Der Pfeil von dem Sender 21 dem Empfänger 31 soll das analoge Signal und seine Übertragungsrichtung darstellen. Zwischen den Einrichtungen 32 und 22 kann eine unidirektional elektronische Datenverbindung bestehen. Diese kann eine Kabel oder Funkverbindung sein, die eine Datenübertragung von dem zweiten Computer zu dem ersten Computer ermöglicht und in entgegengesetzter Richtun verhindert. Dabei ist es bevorzugt, dass die Einrichtung 32 ausschließlich sendet und die Einrichtung 22 ausschließlich empfängt. Hierdurch kann gewährleistet sein, dass über die digitale Datenverbindung zwischen dem zweiten Computer 30 dem ersten Computer 20 keine Schadsoftware von dem ersten Computer 20 zu dem zweiten Computer 30 gelangt.

Die Umwandlung des digitalen Signals in eine analoges Signal mittels des Wandlers 21 kann mit einem Verlust an Informationen einhergehen. Daher findet das Erfindungsgemüse Kommunikationssystem gerade dort seinen Einsatz, wo eine rudimentäre Datenübertragung ausreichend ist. Dies kann beispielsweise bei der Übermittlung eines Textes einer elektronischen Nachricht, einer Bilddatei oder Videodateien der Fall sein. Die Übermittlung von komplexen Programmcode kann mit einem erhöhten Übertragungsaufwand verbunden sein. Durch das Auslesen der elektronischen Nachrichten des ersten Computers und Übermittlung der selbigen als analoge Signal zu dem zweiten Computer 30 wird schon im Vorhinein eventuell vorhandene Schadsoftware in der elektronischen Nachricht herausgefiltert, da beispielsweise nur der Text oder die Bilder für die Übertragung ausgelesen werden. Die Kommunikationseinrichtung beziehungsweise das Kommunikationssystem 10 kann auch als in sich geschlossene Einheit vorliegen, wobei die Anschlüsse 40 und 50 jeweils einen der beiden Untereinheiten 20 und 30 mit jeweils einem ersten und zweiten Computer verbinden können. Dadurch kann das Kommunikationssystem als austauschbare Box innerhalb bestehender Kommunikationswege beispielsweise zwischen 2 Computern integrierbar sein.

Um eventuelle Manipulationsversuche von außen zu vermeiden, kann die Kommunikationseinheit 10 mit einer isolierten Hülle bereitgestellt sein, welche die Übermittlung von Daten, beispielsweise über Funk, Schall oder Licht verhindern kann. Ebenfalls kann die Isolation 60 um die wesentlichen Elemente des Kommunikationssystems 10 herum verhindern, dass Störsignale die Übertragungsqualität des analogen Systems von dem Sender 21 zu dem Empfänger 31 stören können.

## Patentansprüche

1. Datenverarbeitungssystem digitaler Daten mit mindestens einem die Daten empfangenden analogen Sender sowie mindestens einem analogen Empfänger,
**dadurch gekennzeichnet,**
**dass** der Sender mit dem Empfänger kontaktfrei kommuniziert.

2. Datenverarbeitungssystem nach Anspruch 1,
**dadurch gekennzeichnet,**
**dass** der Empfänger einen Wandler aufweist, welcher analoge Signale/Daten des Senders in digitale Signale/Daten umwandelt.

3. Datenverarbeitungssystem nach Anspruch 2,
**dadurch gekennzeichnet,**
**dass** das analoge Signal ein akustisches Signal ist.

4. Datenverarbeitungssystem nach einem der Ansprüche 1 bis 3,
**dadurch gekennzeichnet,**
**dass** der Sender mit einem ersten Computer und der Empfänger mit einem zweiten Computer datenverbunden sind.

5. Datenverarbeitungssystem nach einem der Ansprüche 1 bis 4,
**dadurch gekennzeichnet,**
**dass** der zweite Computer mit dem ersten Computer, vorzugsweise über das Datenverarbeitungssystem, elektronisch verbunden ist, wobei eine Kommunikation über die elektronische Verbindung nur von dem zweiten Computer in Richtung des ersten Computers ermöglicht ist.

6. Datenverarbeitungssystem nach einem der Ansprüche 1 bis 4,
**dadurch gekennzeichnet,**
**dass** das Datenverarbeitungssystem über den ersten Computer mit einem öffentlichen Netzwerk, insbesondere dem Internet verbunden ist.

7. Datenverarbeitungssystem nach einem der Ansprüche 1 bis 5,
**dadurch gekennzeichnet,**
**dass** das Datenverarbeitungssystem über den zweiten Computer mit einem privaten Netzwerk, insbesondere einem Intranet verbunden ist.

8. Datenverarbeitungssystem nach einem der Ansprüche 1 bis 6,
**dadurch gekennzeichnet,**
**dass** das Signal/die Daten der Inhalt, insbesondere der Text und/oder die Bilder, einer elektronischen Nachricht, insbesondere einer E-Mail, ist.

9. Verfahren zur Filtration von Schadsoftware aus einem digitalen Signal, bei welchem das Signal mittels eines analogen Senders gesendet wird, das analoge Signal von einem analogen Empfänger empfangen wird und das empfangene analoge Signal in ein digitales Signal zurück gewandelt wird.
